# EUROPEAN PATENT APPLICATION

(11) **EP 2 327 867 A2**
(43) Date of publication of application: **01.06.2011**
(21) Application number: 10192462.9
(22) Date of filing: 24.11.2010
(51) Int. Cl.: F02C 5/00

(54) **Thrust modulation in a multiple combustor pulse detonation engine using cross-combustor detonation initiation**

(30) Priority: 30.11.2009 US 627763
(71) Applicant: General Electric Company, Schenectady, NY 12345 (US)
(72) Inventor: Glaser, Aaron Jerome, Niskayuna, NY 12309 (US); Rasheed, Adam, Niskayuna, NY 12309 (US); Hofer, Douglas Carl, Niskayuna, NY 12309 (US); Joshi, Narendra Digamber, Niskayuna, NY 12309 (US)
(74) Representative: Gray, Thomas

(57) **Abstract**

A method and apparatus for modulating the thrust during a flight envelope of a multiple combustor chamber detonation engine 100 using cross-combustor chamber detonation initiation are provided. The detonation combustor chambers 104 are filled with a combustible mixture of fuel and oxidizer. The combustible mixture in one of the detonation combustor chambers 104 is ignited by an ignition source 112, and the remaining detonation combustor chambers 104 are ignited by detonation cross-firing via connectors 118. A controller 116 controls the ignition source 112 and the supply of oxidizer and fuel to the detonation combustor chambers 104 to modulate the thrust of the engine 100 during the flight envelope.

## Description

### BACKGROUND

In pulse detonation combustors, a mixture of fuel and oxidizer is ignited and is transitioned from deflagration to detonation, so as to produce supersonic shock waves, which can be used to provide thrust, among other functions. This deflagration to detonation transition (DDT) typically occurs in a tube or pipe structure, having an open end through which the exhaust exits to produce a thrust force.

The deflagration to detonation process begins when a fuel-oxidizer mixture in a tube is ignited via a spark or other source. The subsonic flame generated from the spark accelerates as it travels along the length of the tube due to various chemical and flow mechanics. As the flame reaches sonic velocity, shocks are formed which reflect and focus creating "hot spots" and localized explosions, eventually transitioning the flame to a super-sonic detonation wave.

Pulse detonation combustion can be applied in various practical engine applications. An example of such an application is the development of a pulse detonation engine (PDE) where the hot detonation products are directed through an exit nozzle to generate thrust for aerospace propulsion. Pulse detonation engines that include multiple combustor chambers are sometimes referred to as a "multi-tube" configuration for a pulse detonation engine. Another example is the development of a "hybrid" engine that uses combustion of both conventional gas turbine engine technology and pulse detonation (PD) technology to maximize operation efficiency. These pulse detonation turbine engines (PDTE) can be used for aircraft propulsion or as a means to generate power in ground-based power generation systems.

In multi-tube PDE configurations, the concept of detonation branching or cross-firing can be implemented. In this configuration, the detonation in one tube is initiated by an external source such as a spark discharge or laser pulse. Detonation in the remaining tubes is initiated through cross-firing. More particularly, when the detonation wave is formed in one combustor, a detonation induced shock wave is transmitted through a cross-tube or connector to another combustor. The transmitted shock wave then initiates detonation in the other combustor.

While only one ignition source is required in multi-tube configurations using detonation branching, the firing frequency and the sequential firing pattern are fixed for a given mass flow, making thrust modulation difficult.

For these and other reasons, there is a need for the present invention.

### SUMMARY

A method and apparatus for modulating the thrust of a multiple combustor chamber detonation engine using cross-combustor detonation initiation are provided. The detonation combustor chambers are filled with a combustible mixture of fuel and oxidizer. The combustible mixture in one of the detonation combustor chambers is ignited by an ignition source, and the remaining detonation combustor chambers are ignited by detonation cross-firing via connectors. A controller controls the ignition the operating conditions of the detonation combustor chambers to modulate the thrust of the engine during the flight envelope.

### DETAILED DESCRIPTION OF THE DRAWINGS

The nature and various additional features of the invention will appear more fully upon consideration of the illustrative embodiments of the invention which are schematically set forth in the figures. Like reference numerals represent corresponding parts.
FIG. 1 illustrates a multiple combustor chamber pulse detonation engine according to an exemplary embodiment of the present invention;
FIG. 2 illustrates a multiple combustor chamber configuration according to an exemplary embodiment of the present invention;
FIG. 3 illustrates a cross-sectional view of a multiple combustor chamber configuration according to another exemplary embodiment of the present invention;
FIG. 4 illustrates an exemplary embodiment of a firing sequence for the multiple combustor chamber configuration shown in FIG. 3;
FIG. 5 illustrates another exemplary embodiment of a firing sequence for the multiple combustor chamber configuration shown in FIG. 3;
FIG. 6 illustrates yet another exemplary embodiment of a firing sequence for the multiple combustor chamber configuration shown in FIG. 3;
FIGs. 7A-7D illustrate graphical representations of equivalence ratio and fill fraction according to an exemplary embodiment of the present invention;
FIG. 8 illustrates a cross-sectional view of a multiple combustor chamber configuration according to another exemplary embodiment of the present invention;
FIG. 9 illustrates an exemplary embodiment of a firing sequence for the multiple combustor chamber configuration shown in FIG. 8;
FIG. 10 illustrates a variable length connector according to an exemplary embodiment of the invention; and
FIGs. 11A and 11B illustrate variable geometry exit nozzles according to exemplary embodiments of the invention.

### DETAILED DESCRIPTION

As used herein, a "pulse detonation combustor" (PDC) is understood to mean any device or system that produces both a pressure rise and velocity increase from a series of repeated detonations or quasi-detonations within the device. A "quasi-detonation" is a supersonic turbulent combustion process that produces a pressure rise and velocity increase higher than the pressure rise and velocity increase produced by a deflagration wave. A PDC is considered the overall combustor for the engine. It can be arranged in a can-annular arrangement, in which case it may include an array of one or more pulse detonation bundles (PDB), each of which can include one or more pulse detonation combustor chambers (PDCC). The PDCCs often take the form of tubes or pipes, but they can have other shapes as well. Alternatively, the entire PDC may be arranged in a different manner, such as a full-annular arrangement or a rotating detonation type arrangement. The PDC can be the combustor for a pulse detonation turbine engine (PDTE) or for a pulse detonation engine (PDE).

Embodiments of PDCCs include a means of igniting a fuel/oxidizer mixture, for example a fuel/air mixture, and a detonation chamber, in which pressure wave fronts initiated by the ignition process coalesce to produce a detonation wave or quasi-detonation. Each detonation or quasi-detonation is initiated either by external ignition, such as spark discharge or laser pulse, or by gas dynamic processes, such as shock focusing, auto ignition or by another detonation (i.e. cross-fire). As used herein, a detonation is understood to mean either a detonation or a quasi-detonation. Pulse detonation may be accomplished in a number of types of detonation chambers including detonation tubes, shock tubes, resonating detonation cavities, for example.

Pulse detonation combustors are used for example in aircraft engines, missiles, and rockets. As used herein, "engine" means any device used to generate thrust and/or power.

Embodiments of the present invention will be explained in further detail by making reference to the accompanying drawings, which do not limit the scope of the invention in any way.

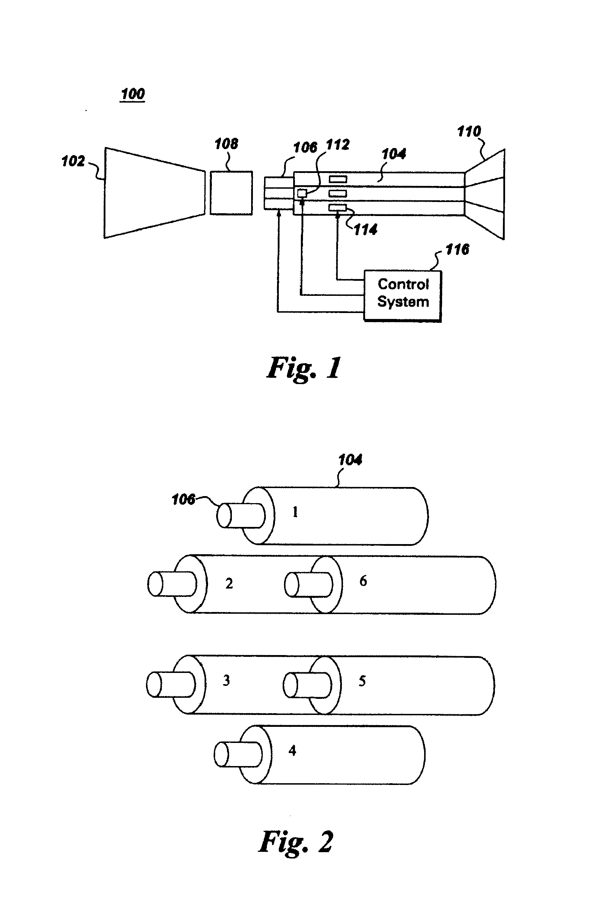

FIG. 1 depicts an engine 100 in accordance with an embodiment of the present invention. As shown, the engine 100 contains a compressor stage 102 and a plurality of PDCCs 104. Coupled to the PDCCs 104 are nozzles 110, which output the exhaust from the PDCCs 104. In the embodiment shown, each PDCC 104 is coupled to its own nozzle 110. However, the present invention is not limited to this specific embodiment as it is contemplated that a single nozzle, plenum and/or manifold structure can be used to output the exhaust from the PDCCs 104.

Between the PDCCs 104 and the compressor stage 102 is an inlet system 108, which comprises a plurality of inlet valves 106. The inlet system 108 may include a plenum or manifold structure to deliver flow from the compressor stage 102 to the inlet valves 106. The inlet valves 106 can be of any known or conventionally used inlet valve structure, as PDCC inlet valve structures and systems are known, the details surrounding these structures and systems will not be discussed in detail herein, as any known valve structure can be employed without departing from the scope and spirit of the present invention, so long as the valve structure is capable of performing within the desired operational parameters for the engine 100. In addition, the use of inlet valves is for illustration purposes only. Embodiments can also be valveless. It is noted that although the following description may refer to "air" in many instances as the oxidizer, embodiments of the present invention are not limited in this regard, and the use of "air" is not intended to be limiting. Other oxidizers, such as oxygen can be used.

In the exemplary embodiment of the present invention, as shown in FIG. 1 and FIG. 2, each of the PDCCs 104 is coupled to its own inlet valve 106 and fuel valve 114. This allows for maximum flexibility of control of the engine 100 and the firing of the PDCCs 104. In another exemplary embodiment of the present invention (not shown) the inlet valves 106 have a structure such that they are coupled to more than one, for example two (2), PDCCs 104 such that each inlet valve 106 is operationally coupled to more than one PDC 104. In such an embodiment, the valve 106 can provide inlet flow to any one or all of the PDCCs 104 to which it is coupled at a time. Embodiments of the invention include any other suitable arrangement of inlet valves. An ignition source 112 is provided in at least one of the PDCCs. The ignition source can be any known type of ignition source. The invention is not limited in this regard.

In an exemplary embodiment, the operation of the PDCCs 104 is controlled by a control system 116, which can be any known computer or microcontroller based control system. The control system 116 controls the operation of the inlet valves 106, the fuel valves 114, and the ignition source 112 as described in more detail below.

FIG. 2 graphically depicts the PDCCs 104 of FIG. 1 in an asymmetric view, where each PDC 104 has an inlet valve 106 coupled to it. In this embodiment, six (6) PDCCs 104 are shown distributed in a can-annular arrangement. However, the present invention is not limited to this quantity or arrangement of PDCCs 104, that is any number and/or physical arrangement of PDCCs 104 can be employed in various embodiments of the present invention.

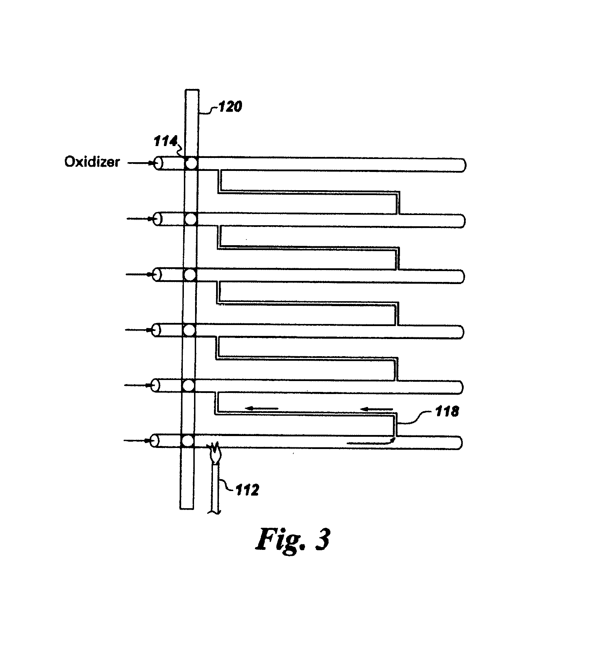

Referring to FIG. 3, the PDCCs 104 are arranged to facilitate cross-combustor or cross-fire detonation. Each PDCC 104 is coupled to another PDCC 104 via a connector 118. The connectors serve as a conduit for the detonation from one PDCC to a next PDCC, as shown by the arrows in the connector 118. In the exemplary embodiment shown, an external ignition source 112 is used to initiate detonation in one of the PDCCs 104. The ignition source 112 can be a spark discharge, a laser pulse, or any other known type of ignition source. The resulting detonation in the PDCC 104 initiates the detonation in another PDCC 104 via the connector 118. Although FIG. 3 shows the connectors 118 connecting neighboring or adjacent PDCCs 104, the connectors 118 could be configured to connect the PDCCs 104 in any arrangement suitable to the particular application and function. For example, the connectors 118 could connect the PDCCs 104 to provide for non-sequential firing. In addition, an external ignition source could be used in any of the other PDCCs 104 either in addition to the cross-fire detonation or to provide for external ignition. In the embodiment shown in FIG. 3, fuel is supplied to the PDCCs 104 by a fuel manifold 120 via fuel valves 114. However, the invention is not limited in this regard, and any suitable arrangement can be used to supply fuel.

The foregoing configuration exemplifies a sequential firing pattern. However, the PDCCs 104 can be arranged for other specific firing patterns that may include, without limitation, firing multiple PDCCs simultaneously such as dual opposed, or tri-fire, etc. Robustness can be improved by, for example, providing an ignition source in more than one of the PDCCs 104, or providing multiple ignition sources 112 with a single PDC 104. The PDCCs 104 can be arranged in any suitable geometric pattern.

According to embodiments of the invention, the thrust from the PDCCs 104 in the engine 100 is controlled by the control system 116. Embodiments of the invention modulate thrust of the PDCCs during the flight envelope (e.g., while the engine is operating) using one or more techniques selected from, without limitation, varying the firing pattern repetition rate (e.g. frequency), skip firing, equivalence ratio (Phi), fill fraction (FF), variable connectors, variable exit nozzle area, and inlet mass flow. Although these embodiments are described with reference to cross-fire sequential detonation initiation, the embodiments apply equally well to any cross-combustor detonation initiation firing pattern. Further, the figures show the combustors in a side-by-side arrangement, but that is purely for understanding purposes.

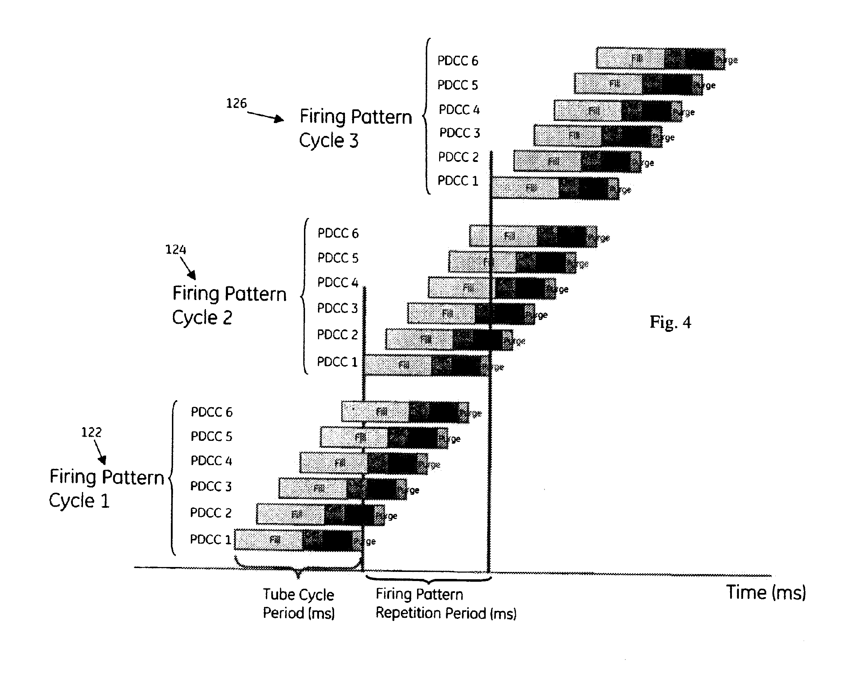

FIG. 4 shows the PDCC cycle period of each PDCC 104 and a firing pattern repetition period of the PDCCs 104 shown in FIG. 3. Each "bar" shown in FIG. 4 represents a firing cycle of a single PDCC 104, such that the left most portion of the bar shows the fill portion of the cycle, the adjacent portion represents the detonation portion of the cycle, followed by the blow down portion and the purge portions of the cycle. These four stages make up a single firing cycle of a PDCC. It is noted that the respective length of the portions or sections of the bars shown in FIG. 4 are not intended to be to scale with respect to the durations of each of the stages of a firing cycle, but are simply representative as a visual guide. It is also noted that the purge portion of the cycle can either be at the end of the blow down portion or before the fill portion of the cycle depending on valve operation. FIG. 4 shows only three firing pattern cycles, 122, 124, and 126, for purposes of facilitating description of embodiments of the invention.

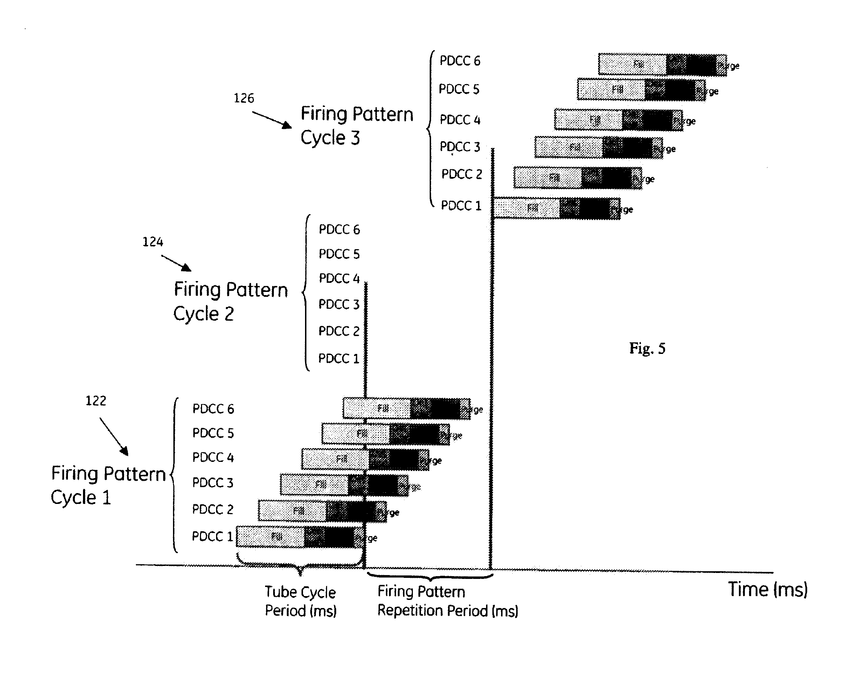

Optimized cross-fire detonation occurs when the PDCC cycle period is equal to the firing pattern repetition rate. Optimized timing is fixed for a given mass flow rate since fill dominates the timing cycle and defines the maximum firing frequency at a given operating condition. FIGs. 5-6 show variations in the firing frequency or firing pattern repetition period of the PDCCs 104 according to embodiments of the invention, which will be discussed in more detail below.

According to an embodiment of the invention, the firing pattern repetition rate is varied by inducing a delay between the firing pattern cycles, e.g., skipping an entire firing pattern cycle or a portion of a firing pattern cycle. An exemplary embodiment is shown in FIG. 5 where the control system 116 controls the ignition source 112, the inlet valves 106, and the fuel valves 114 so that the entire firing pattern cycle 124 is skipped. This can be accomplished by controlling the ignition source 112 so that it is not ignited for the firing pattern cycle 124. This can also be accomplished by controlling both the inlet valves 106 and the fuel valves 114 so that they are closed for the entire firing pattern cycle 124 of the PDCCs 104. Specifically, no oxidizer or fuel is supplied to the PDCCs 104 for the entire firing pattern cycle so that no detonation occurs in the PDCCs 104 for this cycle. This could also be accomplished by simply closing the fuel valves 114 for the entire firing pattern cycle to prevent detonation in the PDCCs 104 for this cycle.

Skipping an entire firing pattern cycle of the PDCCs 104 results in a turn-down or decrease in thrust of fifty percent (50%). Embodiments of the invention are not limited to skipping an entire firing pattern cycle of the PDCCs 104. Skipping just part of a firing pattern cycle can also be employed to achieve smaller turndowns, which is described in more detail below. In addition, any suitable delay can be introduced between the firing pattern cycles. In other words, any suitable firing pattern repetition period can be used to achieve the desired thrust. For example, a delay of two PDC cycle periods (e.g., fire PDCCs 1, 2, 3, 4, 5, 6, wait, wait, fire PDCCs 1, 2, 3, 4, 5, 6, etc.) could be used. This would result in a 6/8 or 75% thrust modulation.

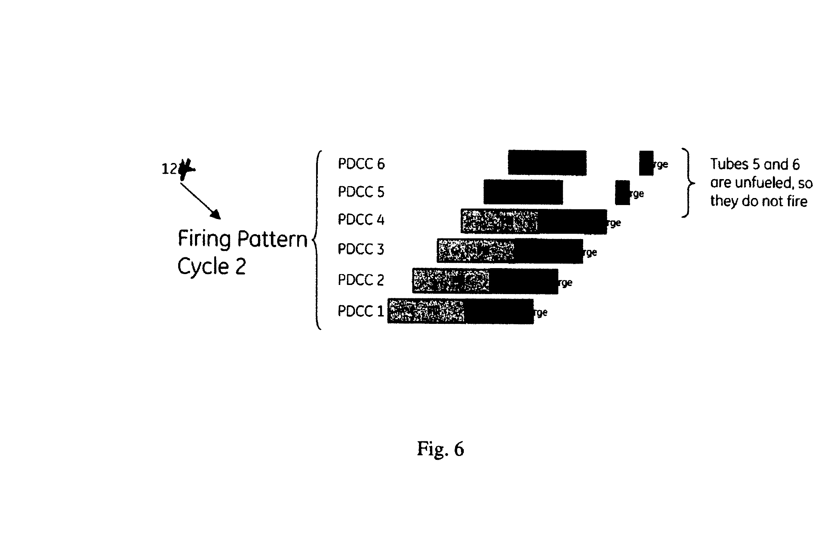

FIG. 6 shows an embodiment that provides for fmer thrust modulation by skipping part of a firing pattern cycle. According to this embodiment, the control system 116 controls the fuel valves 114 so that the fuel valve 114 in one or more of the PDCCs 104 remains closed during a firing pattern cycle, e.g. firing pattern cycle 124, of the PDCCs 104, which prevents detonation from occurring in the one or more PDCs 104 (e.g., skip firing). In the example shown in FIG. 6, the control system 116 controls the fuel valves 114 in the last two PDCCs 104 so that they remain closed during the firing pattern cycle. Therefore, the last two PDCCs 104 will not detonate during this firing pattern cycle resulting in approximately a thirty percent (30%) reduction in thrust. However, embodiments of the invention are not limited to suppressing detonation in the last PDCCs 104 in the cluster. Detonation in any of the PDCCs 104 can be controlled by the control system 116 according to the application and performance desired. The control system 116 can be arranged to increase or decrease the thrust by appropriately controlling the fuel valves 114 of any of the PDCCs 104 in an appropriate arrangement to achieve the desired thrust.

The embodiments described with respect to FIGs. 5 and 6 can be combined to achieve the desired thrust modulation. In various embodiments of the present invention the firing frequency can be changed in conjunction with or as an alternative to preventing detonation or skip firing as discussed above. More particularly, the control system 116 can vary the firing pattern repetition rate or frequency as well as preventing detonation in particular PDCCs 104 during each firing pattern cycle to modulate the thrust of the engine 100 as desired.

According to another embodiment of the invention, the thrust modulation can also be achieved by controlling the inlet valves 106 and/or the fuel valves 114 to vary the fill fraction and/or the equivalence ratio in the PDCCs 104.

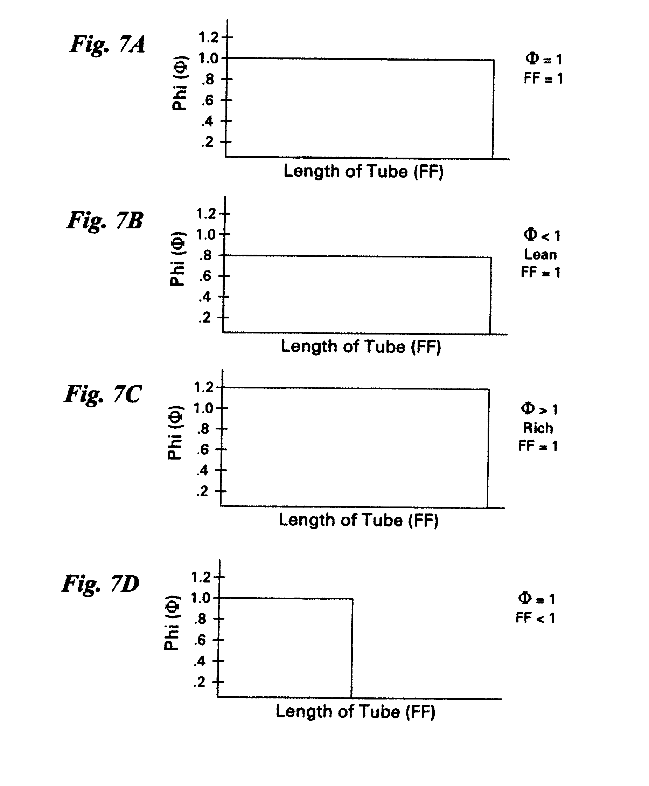

As is generally understood, "equivalence ratio" of a PDCC is the ratio of the fuel-to-oxidizer ratio to the stoichiometric fuel-to-oxidizer ratio. Thus, an equivalence ratio of 1 means that the fuel-to-oxidizer ratio in the PDCC is the same as the stoichiometric fuel-to-oxidizer ratio for the given conditions. This condition is shown in FIG. 7A. When the equivalence ratio is less than 1 the fuel-to-oxidizer ratio is "lean," and when the equivalence ratio is higher than 1 the fuel-to-oxidizer ratio is "rich," as shown in FIGs. 7B and 7C. The thrust output by the PDCCs 104 of the engine 100 can be adjusted by varying the fuel-to-oxidizer ratio or the equivalence ratio during the fill stage. In a further embodiment, the equivalence ratio can be controlled over a length of the PDCC. In such an embodiment, for example, the mixture can be rich at the head end of the PDCC and lean over the length of the PDCC to reduce emissions and increase efficiency. As used herein, spatial equivalence ratio or spatial profile is intended to mean the equivalence ratio physically within the PDCC.

The Fill Fraction (FF) of a PDCC is generally known as the volume of mixture with respect to the volume of the PDCC. A FF of 1 indicates that the entire PDCC has been filled with a fuel-oxidizer mixture. A FF less than 1 means that the PDCC is underfueled. For example, when the inlet valve 106 and the fuel valve 114 for a PDCC 104 are controlled to provide for a fill stage that fills fifty percent of the PDCC 104 with a fuel-oxidizer mixture, then the FF is less than 1.

It is noted that the vertical axis in FIGs. 7A-7D is identified as "Phi," which for the purposes of these graphs is the equivalence ratio. FIGs. 7A-7C illustrate embodiments of the invention where the equivalence ratio is varied while the FF is 1. FIG. 7D shows an exemplary embodiment where the equivalence ratio is 1 and the FF is less than 1.

FIG. 7A shows an equivalence ratio of 1 such that the fuel-to-oxidizer ratio in the PDCC 104 is the same as the stoichiometric fuel-to-oxidizer ratio for the given conditions. In this embodiment, thrust is modulated by varying the equivalence ratio in one or more of the PDCCs 104 to below 1. FIG. 7B shows an equivalence ratio of 8, indicating that the particular PDCC is running lean with an equivalence ratio less than 1. The control system 116 controls the fuel valve 114 for the PDCC 104 such that the amount of fuel supplied to the PDCC 104 is decreased to reduce the equivalence ratio of the PDCC 104. Filling the PDC with a fuel-oxidizer mixture having an equivalence ratio less than 1 decreases the thrust generated by the PDCC. In other words, decreasing the fuel concentration decreases the thrust. The overall thrust of the engine 100 can be modulated by varying the equivalence ratio in one or more of the PDCCs 104.

Thrust modulation can be achieved by maintaining an equivalence ratio of 1 while reducing the FF less than 1, as shown in FIG. 7D. For example, the control system 116 controls the inlet valve 106 and the fuel valve 114 during the fill stage for the PDCC 104 such that the PDC is fifty percent filled. Therefore, the FF is fifty percent or less than 1. The decrease in FF means that the amount of fuel supplied to the PDCC 104 is decreased, which results in decreased thrust. The control system 116 controls the inlet and fuel valves to obtain a desired FF for thrust modulation. The overall thrust of the engine 100 can be modulated by varying the FF in one or more of the PDCCs 104.

Another embodiment of the invention provides for thrust modulation for a PDCC 104 by filling the PDCC 104 with a fuel-oxidizer mixture that does not allow a detonation to form. This can be achieved by controlling the inlet valve 106 and the fuel valve 114 of the PDCC 104 such that the fuel-oxidizer mixture is very lean (equivalence ration less than 1) and below a predetermined threshold. When the fuel-oxidizer is below the threshold, detonation cannot occur, therefore, reduced thrust is generated from the PDCC 104. Detonation can also be suppressed by controlling the inlet valve 106 and the fuel valve 114 of the PDCC 104 during the fill stage so that the PDCC 104 is filled below a threshold FF. When the FF is below the threshold, detonation cannot occur, and therefore, reduced thrust is generated from the PDCC 104. The overall engine thrust is modulated by controlling the equivalence ratio and/or the FF so that detonation cannot occur in one or more of the PDCCs 104.

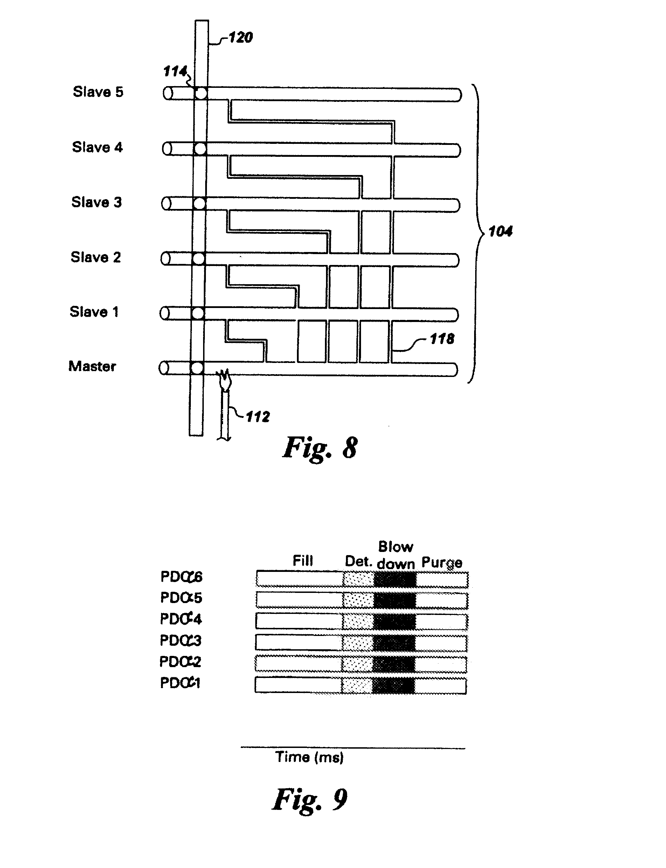

FIG. 8 shows another multiple PDCC arrangement according to an exemplary embodiment of the invention. In this arrangement, detonation in a first one of the PDCCs 104 is initiated from an external ignition source, and the detonation in this PDCC 104 initiates detonation in all of the remaining PDCCs 104 via connectors. Since the first PDCC 104, or the master PDCC 104, is connected to each of the remaining PDCCs 104, or slave PDCCs 104, all of the PDCCs have to be ready for firing at the same time. In other words, the PDCCs 104 fire in phase, as shown in FIG. 9. The shock wave from the first or master PDCC is applied to the remaining slave PDCCs. Thrust modulation in this arrangement is achieved by any of the techniques disclosed herein.

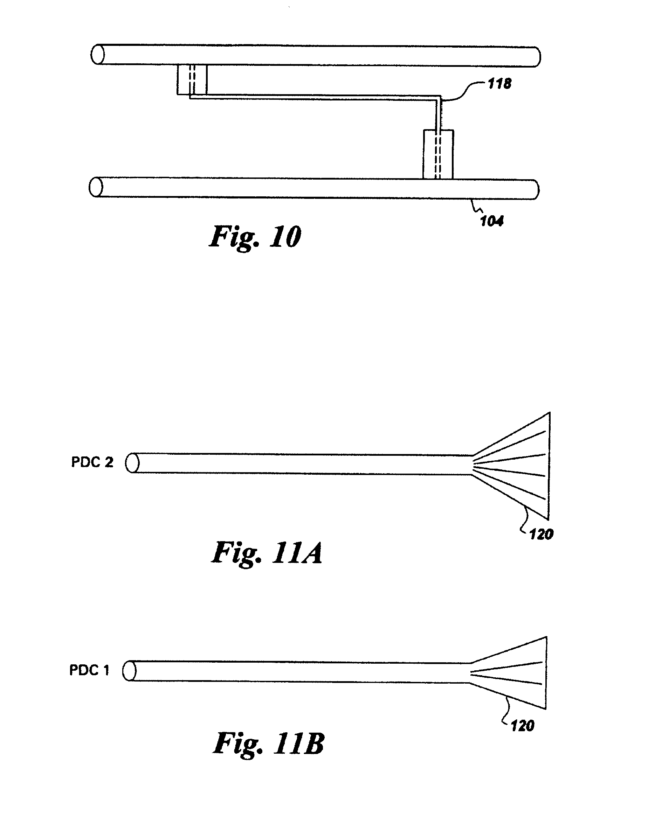

According to another exemplary embodiment of the invention, thrust modulation is controlled by varying the length of the connectors 118 that couple the PDCCs 104 together. Varying the length of the connectors 118 changes the firing timing or firing frequency, which enables thrust modulation. The length of the connectors 118 can be varied by any suitable method and structure. In an exemplary embodiment, the connectors 118 are arranged as "telescoping" connectors, as shown in FIG. 10. The telescoping function can be implemented by hydraulics or other mechanical means. The control system 116 controls the thrust of the engine by controlling the length of the connectors 118. Of course, embodiments of the invention are not limited to telescoping connectors, but include any suitable arrangement to enable variable length connectors 118. Thrust modulation according to this embodiment can be applied in either of the PDCC arrangements shown in FIGs. 3 and 8, either alone or in combination with another thrust modulation techniques disclosed herein.

In another exemplary embodiment of the invention, thrust modulation is achieved by varying the geometry of an exit nozzle 120 of the PDCC 104, as shown in FIGs. 11A and 11B. In FIG. 11A, the exit nozzle 120 is fully open to enable maximum thrust output from the PDCC 104. In FIG. 11B, the exit nozzle 120 is narrowed to reduce the thrust output from the PDCC 104. The exit nozzle 120 can be arranged as a segmented exit nozzle, for example, to enable dynamic adjustment of the exit nozzle geometry to modulate the thrust from the PDCC 104. Each PDCC 104 can be configured to have a variable geometry exit nozzle 120, or the PDCCs 104 can have a common exit nozzle 120 having variable geometry. In this embodiment, the configuration of the segmented exit nozzle 120 is controlled via hydraulics or other suitable means. The control system 116 controls the thrust of the engine by controlling the geometry of the exit nozzle 120. Of course, embodiments of the invention are not limited to a segmented exit nozzle, but include any suitable arrangement to enable a variable geometry exit nozzle 120. Thrust modulation according to this embodiment can be applied in either of the PDCC arrangements shown in FIGs. 3 and 8, either alone or in combination with another thrust modulation technique

It should be noted that the control system 116 modulates the thrust of the engine 100 using any method or combination of methods and arrangements discussed above.

While the invention has been described in terms of various specific embodiments, those skilled in the art will recognize that the invention can be practiced with modification within the spirit and scope of the claims.

For completeness, various aspects of the invention are now set out in the following numbered clauses:
1. An engine, comprising:
   a plurality of detonation combustor chambers, at least one of the pulse detonation combustor chambers comprising an ignition source;
   a plurality of connectors, each of the connectors connecting two of the detonation combustor chambers to facilitate cross-fire detonation between the two pulse detonation combustor chambers;
   an oxidizer supply coupled to the detonation combustor chambers;
   a fuel supply coupled to the detonation combustor chambers; and
   a controller to control the supply of oxidizer and fuel from the oxidizer supply and the fuel supply to the detonation combustor chambers to modulate the thrust of the engine during the flight envelope.
2. The engine of clause 1, further comprising:
   one or more variable geometry exit nozzles coupled to one or more of the detonation combustor chambers; and
   wherein the controller controls the variable geometry exit nozzles to modulate the thrust of the engine during the flight envelope.
3. The engine of clause 1, wherein the connectors are variable length connectors; and wherein the controller controls the length of the variable length connectors to modulate the thrust of the engine during the flight envelope.
4. The engine of clause 1, wherein the oxidizer supply comprises inlet valves coupled to the pulse detonation combustor chambers, respectively.
5. The engine of clause 1, wherein the oxidizer supply comprises one or more inlet valves coupled to one or more pulse detonation combustor chambers.
6. The engine of clause 1, wherein the controller controls ignition of the ignition source to vary a frequency of firing the pulse detonation combustor chambers.
7. The engine of clause 1, wherein the controller controls the supply of fuel to vary a firing pattern of one or more of the pulse detonation combustor chambers.
8. The engine of clause 1, wherein the controller controls the supply of the fuel and the supply of the oxidizer to vary one of an equivalence ratio or a fill fraction of one or more of the pulse detonation combustor chambers.
9. The engine of clause 8, wherein the controller controls the supply of the oxidizer and the fuel for one or more of the pulse detonation combustor chambers to fill the associated pulse detonation combustor chamber with the oxidizer and the fuel to obtain the equivalence ratio less than one to reduce the thrust of the engine during the flight envelope.
10. The engine of clause 8, wherein controller controls the supply of the oxidizer and the fuel for one or more of the pulse detonation combustor chambers to fill the associated pulse detonation combustor chamber with the oxidizer and the fuel to obtain the fill fraction less than one to reduce the thrust of the engine during the flight envelope.
11. The engine of clause 8, wherein the controller controls the supply of the oxidizer and the fuel for one or more of the pulse detonation combustor chambers wherein the equivalence ratio is varied along a length of the one or more pulse detonation combustor chambers.
12. The engine of clause 1, wherein the engine is a pulse detonation turbine engine.
13. A method for thrust modulation during a flight envelope in an engine having detonation combustor chambers coupled together by connectors, the method comprising:
   filling the detonation combustor chambers with a combustible mixture of oxidizer and
   fuel;
   igniting the combustible mixture in one of the detonation combustor chambers via an ignition source to generate a detonation shock wave that propagates in the one detonation combustor chamber;
   igniting remaining detonation combustor chambers by propagating the detonation shock wave from the one detonation combustor chamber to the remaining detonation combustor chambers via the connectors; and
   controlling supply of the oxidizer and the fuel to the detonation combustor chambers to modulate the thrust of the engine during the flight envelope.
14. The method of clause 13, wherein the controlling the supply of the oxidizer and the fuel comprises:
   controlling ignition of the ignition source to vary a frequency of firing the detonation combustor chambers.
15. The method of clause 13, wherein the controlling the supply of the oxidizer and the fuel comprises:
   controlling at least one of the supply of the oxidizer or the fuel to vary a firing pattern of the detonation combustor chambers.
16. The method of clause 13, wherein the controlling the supply of the oxidizer and the fuel comprises:
   controlling the supply of the fuel for one or more of the detonation combustor chambers to prevent fuel supply for a predetermined period of time during a firing pattern cycle.
17. The method of clause 13, wherein the controlling the supply of the oxidizer and the fuel comprises:
   controlling the supply of the oxidizer and the fuel to vary an equivalence ratio of one or more of the detonation combustor chambers during a firing pattern cycle.
18. The method of clause 17, wherein the controlling the supply of the oxidizer and the fuel comprises:
   supplying the fuel for one or more of the detonation combustor chambers during a firing pattern cycle for a period of time to fill the associated detonation combustor chamber with fuel to obtain an equivalence ratio less than one to reduce the thrust of the engine during the flight envelope.
19. The method of clause 13, wherein controlling the ns comprises:
   controlling the supply of the oxidizer and the fuel to vary a fill fraction of one or more of the detonation combustor chambers.
20. The method of clause 19, wherein the controlling the supply of the oxidizer and the fuel comprises:
   supplying the oxidizer and the fuel for one or more of the detonation combustor chambers during a firing pattern cycle for a period of time to fill the associated detonation combustor chamber to obtain a fill fraction less than one to reduce the thrust of the engine during the flight envelope.
21. The method of clause 13, wherein the detonation combustor chambers comprise variable geometry exit nozzles, respectively, and wherein the method further comprises controlling the variable geometry exit nozzles for one or more of the detonation combustor chambers to adjust an opening of the variable geometry exit nozzles to modulate the thrust from the engine during the flight envelope.
22. The method of clause 13, wherein the connectors are variable length connectors, and wherein the method further comprises controlling the length one or more of the variable length connectors to modulate the thrust from the engine during the flight envelope.
23. A computer-readable medium comprising computer-readable instructions of a computer program that, when executed by a processor, cause the processor to perform a method for thrust modulation during a flight envelope in an engine having detonation combustor chambers coupled together by connectors, the method comprising:
   filling the detonation combustor chambers with a combustible mixture of oxidizer and
   fuel;
   igniting the combustible mixture in one of the detonation combustor chambers via an ignition source to generate a detonation shock wave that propagates in the one detonation combustor chamber;
   igniting remaining detonation combustor chambers by propagating the detonation shock wave from the one detonation combustor chamber to the remaining detonation combustor chambers via the connectors; and
   controlling supply of the oxidizer and the fuel to the detonation combustor chambers to modulate the thrust of the engine during the flight envelope.
24. The computer-readable medium of clause 23, wherein the controlling the supply of the oxidizer and the fuel comprises:
   controlling ignition of the ignition source to vary a frequency of firing the detonation combustor chambers.
25. The computer-readable medium of clause 23, wherein the controlling the supply of the oxidizer and the fuel comprises:
   controlling the supply of at least one of the oxidizer and the fuel to vary a firing frequency of the detonation combustor chambers.
26. The computer-readable medium of clause 23, wherein the controlling the supply of the oxidizer and the fuel comprises:
   controlling the supply of the fuel for one or more of the detonation combustor chambers to prevent fuel flow for a predetermined period of time during a firing pattern cycle of the detonation combustor chambers.
27. The computer-readable medium of clause 23, wherein the controlling the supply of the oxidizer and the fuel comprises:
   controlling the supply of the oxidizer and the fuel to vary an equivalence ratio of one or more of the detonation combustor chambers during a firing pattern cycle.
28. The computer-readable medium of clause 23, wherein the controlling the supply of the oxidizer and the fuel comprises:
   controlling the supply of the oxidizer and the fuel to vary a fill fraction of one or more of the detonation combustor chambers during a firing pattern cycle.
29. The computer-readable medium of clause 23, wherein the detonation combustor chambers comprise one or more variable geometry exit nozzles, wherein the controlling the supply of the oxidizer and the fuel comprises controlling the variable geometry exit nozzles of one or more of the detonation combustor chambers to modulate the thrust from the engine during the flight envelope.
30. The computer-readable medium of clause 23, wherein the connectors are variable length connectors, and wherein the controlling the supply of the oxidizer and the fuel comprises controlling the length of the variable length connectors of one or more of the detonation combustor chambers to modulate the thrust from the engine during the flight envelope.

## Claims

1. An engine, comprising:
a plurality of detonation combustor chambers, at least one of the pulse detonation combustor chambers comprising an ignition source;
a plurality of connectors, each of the connectors connecting two of the detonation combustor chambers to facilitate cross-fire detonation between the two pulse detonation combustor chambers;
an oxidizer supply coupled to the detonation combustor chambers;
a fuel supply coupled to the detonation combustor chambers; and
a controller to control the supply of oxidizer and fuel from the oxidizer supply and the fuel supply to the detonation combustor chambers to modulate the thrust of the engine during the flight envelope.

2. The engine of claim 1, further comprising:
one or more variable geometry exit nozzles coupled to one or more of the detonation combustor chambers; and
wherein the controller controls the variable geometry exit nozzles to modulate the thrust of the engine during the flight envelope.

3. The engine of claim 1 or 2, wherein the connectors are variable length connectors; and wherein the controller controls the length of the variable length connectors to modulate the thrust of the engine during the flight envelope.

4. The engine of any of the preceding claims, wherein the oxidizer supply comprises one or more inlet valves coupled to one or more pulse detonation combustor chambers.

5. The engine of any of the preceding claims, wherein the controller controls ignition of the ignition source to vary a frequency of firing the pulse detonation combustor chambers.

6. The engine of any of the preceding claims, wherein the controller controls the supply of fuel to vary a firing pattern of one or more of the pulse detonation combustor chambers.

7. The engine of any of the preceding claims, wherein the controller controls the supply of the fuel and the supply of the oxidizer to vary one of an equivalence ratio or a fill fraction of one or more of the pulse detonation combustor chambers.

8. The engine of claim 7, wherein the controller controls the supply of the oxidizer and the fuel for one or more of the pulse detonation combustor chambers to fill the associated pulse detonation combustor chamber with the oxidizer and the fuel to obtain the equivalence ratio less than one to reduce the thrust of the engine during the flight envelope.

9. The engine of claim 7, wherein the controller controls the supply of the oxidizer and the fuel for one or more of the pulse detonation combustor chambers to fill the associated pulse detonation combustor chamber with the oxidizer and the fuel to obtain the fill fraction less than one to reduce the thrust of the engine during the flight envelope.

10. The engine of claim 7, wherein the controller controls the supply of the oxidizer and the fuel for one or more of the pulse detonation combustor chambers wherein the equivalence ratio is varied along a length of the one or more pulse detonation combustor chambers.

11. A method for thrust modulation during a flight envelope in an engine having detonation combustor chambers coupled together by connectors, the method comprising:
filling the detonation combustor chambers with a combustible mixture of oxidizer and
fuel;
igniting the combustible mixture in one of the detonation combustor chambers via an ignition source to generate a detonation shock wave that propagates in the one detonation combustor chamber;
igniting remaining detonation combustor chambers by propagating the detonation shock wave from the one detonation combustor chamber to the remaining detonation combustor chambers via the connectors; and
controlling supply of the oxidizer and the fuel to the detonation combustor chambers to modulate the thrust of the engine during the flight envelope.

12. The method of claim 11, wherein the controlling the supply of the oxidizer and the fuel comprises:
controlling ignition of the ignition source to vary a frequency of firing the detonation combustor chambers.

13. The method of claim 11, wherein the controlling the supply of the oxidizer and the fuel comprises:
controlling at least one of the supply of the oxidizer or the fuel to vary a firing pattern of the detonation combustor chambers.

14. The method of claim 11, wherein the controlling the supply of the oxidizer and the fuel comprises:
controlling the supply of the fuel for one or more of the detonation combustor chambers to prevent fuel supply for a predetermined period of time during a firing pattern cycle.

15. The method of claim 11, wherein the controlling the supply of the oxidizer and the fuel comprises:
controlling the supply of the oxidizer and the fuel to vary an equivalence ratio of one or more of the detonation combustor chambers during a firing pattern cycle.
